# EUROPEAN PATENT SPECIFICATION

(11) **EP 1 632 059 B1**
(45) Date of publication and mention of the grant of the patent: **15.08.2007**
(21) Application number: 04739657.7
(22) Date of filing: 07.06.2004
(51) Int. Cl.: H04L 12/56

(54) **SUPERVISORY PACKET TRANSMISSION TO CONTROL CONGESTION AND CALL ESTABLISHMENT IN BANDWIDTH-LIMITED PACKET-BASED NETWORKS**
ÜBERTRAGUNG VON ÜBERWACHUNGSPAKETEN ZUR STEUERUNG VON ÜBERLASTUNG UND VERBINDUNGSAUFBAU IN PAKETBASIERTEN NETZEN MIT BEGRENZTER BANDBREITE
TRANSMISSION DE PAQUETS DE SUPERVISION DESTINES A COMMANDER L'ENCOMBREMENT ET L'ETABLISSEMENT D'APPEL DANS DES RESEAUX DE PAQUETS A LARGEUR DE BANDE LIMITEE

(30) Priority: 09.06.2003 US 459691
(43) Date of publication of application: 08.03.2006
(73) Proprietor: TELEFONAKTIEBOLAGET LM ERICSSON (publ), 164 83 Stockholm (SE)
(72) Inventor: FEYERABEND, Konrad, 14057 Berlin (DE)
(74) Representative: Kribber, Klaus-Dieter
(86) International application number: PCT/EP2004/006123
(87) International publication number: WO 2004/112323

(56) References cited:
- WO-A-03/013070
- US-A1- 2002 071 387
- US-A1- 2002 181 401
- US-B1- 6 535 486

## Description

### TECHNICAL FIELD OF THE INVENTION

The present invention is directed, in general, to packet-based networks and, more specifically, to methods and apparatus for limiting congestion in packet-based networks, particularly for controlling the transmission of voice traffic.

### BACKGROUND OF THE INVENTION

In a conventional packet-oriented Internet Protocol (IP) network, there is no guarantee of sufficient end-to-end bandwidth. Communication end points inject traffic into the network on a "best effort" basis. This means that the communication endpoints inject traffic into the network, but the network backbone might drop packets when not enough bandwidth is available to transport all the traffic injected by all the communication endpoints.

IP protocols, such as Transmission Control Protocol (TCP), are optimized to cope with certain behavior of transmission equipment. Such protocols can i) increase the bandwidth injected by transmission equipment, such as a host, as long as bandwidth in the transmission media between routers, or network nodes, is available (*i.e.* no packets are dropped), ii) retransmit lost packets, and iii) reduce the traffic injected when packets begin to be lost. With this interaction of router behavior (dropping packets) and end-point behavior (reacting on dropped packets by retransmission and injection of less traffic), a feedback mechanism is established. To avoid oscillation of this feedback mechanism, active queue management algorithms such as Random Early Detect / Random Early Drop (RED) have been utilized; see, for example, Random Early Detection Gateways for Congestion Avoidance. Floyd, S., and Jacobson, V.; IEEE/ACM Transactions on Networking, Volume 1, Number 4, August 1993, pp. 397-413. RED algorithms monitor the queue used to buffer packets before they are transmitted. The need to handle different packet flows with different precedence has been addressed by Differentiated Service (DiffServ) models. According to some differentiated service models, there are three general classes of data traffic; Best Effort (BE), Assured Forwarding (AF) and Expedited Forwarding (EF). The BE class of data traffic has no guarantee of packet delivery. AF traffic takes precedence over BE traffic, and bursts of traffic are preferably stored in queues for delayed transmission rather than being discarded. For BE and AF traffic, active queue management algorithms, such as RED, are required. EF traffic takes precedence over both BE and AF traffic, and is very delay sensitive. For EF traffic (such as voice traffic), delay must be minimized and, if congestion occurs, packets are dropped rather than delayed, since it is assumed that a delayed packet is of no use for the receiver. Since EF traffic relies on short queues, the conventional RED algorithm is not a suitable method to monitor and react to network congestion situations.

Because EF-type traffic, which requires low delay and jitter from the transport technology, cannot use conventional queue-based RED to detect network congestion, alternative methods have been considered to control the network load of EF traffic. In one method, based on EF per hop behavior, an end-to-end resource (*i.e*. bandwidth) reservation is assumed, which means that either a fixed amount of bandwidth is reserved for EF traffic between each pair of end points, or that there is a network protocol that allows dynamic reservation between any two communication endpoints. Both schemes, however, have drawbacks. First, the fixed reservation scheme results in poor utilization of bandwidth and heavy overprovisioning because the network has to be dimensioned for the worst possible scenarios. Second, the dynamic reservation protocol scheme adds a new dimension of complexity and state to the otherwise stateless network model.

A practical network that transports EF traffic often uses a weak version of the fixed reservation scheme, similar to the one used for traditional BE traffic; the network is dimensioned for normal load cases plus a certain overprovisioning factor that covers for unusual traffic patterns. This scheme, however, can lead to cases where an intermediate router or link gets congested if very unusual traffic patterns occur. For example, a network may have capacity of 5000 Erlangs between a router and Media Gateways (MGWs) within the same geographical region, such as the east or west coast regions of the United States, and 1000 Erlangs between a router in the west coast region and a router in the east coast region. Under normal call conditions, most traffic is expected to stay local to the west or east coast regions, where the network capacity is 5000 Erlangs, and the link between the east and west coast region routers, having a capacity of only 1000 Erlangs, is not capable of handling worst-case traffic. During abnormal conditions (e.g. sports events with thousands of fans traveling and phoning home), however, the normal traffic pattern might change dramatically, overloading the network between the west coast and east coast region routers.

The IP protocol is a connectionless protocol, so when a new voice call is established it is unknown whether there is sufficient network capacity between source and destination MGWs and, thus, all calls are admitted to the network. The result can be insufficient capacity of intermediate links, and the routers must discard packets randomly. All calls are affected by the overload, and each user will experience bad voice quality due to dropped voice packets. In a worst-case scenario, this condition might persist for several hours if callers hang up and retry persistently, resulting in a completely unusable voice network. RED and similar protocols use the length of queues in a router to determine whether the router is in an overload situation. This works well as long as there are queues to monitor, so it is an appropriate method for BE and AF traffic. Weighted RED (WRED) works like RED, but allows different treatment of packets in the same queue. The differentiation is normally done based on information, such as the DiffServ Code Point or protocol field.

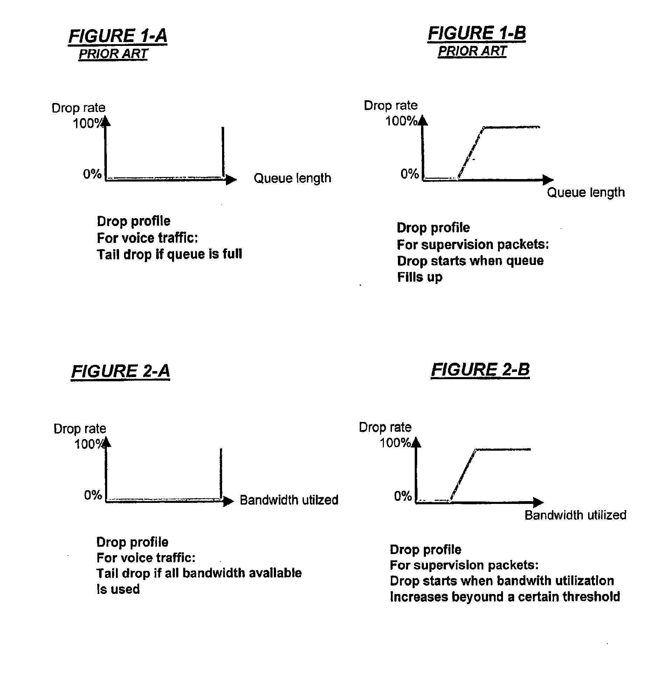

Figures 1-A and 1-B illustrate an exemplary use of RED for EF-type traffic. Depending on the queue fill level (shown on the horizontal axis), 0% to 100% of the packets in a queue are dropped (or marked). In the illustration, there are two profiles for different kinds of traffic: the first profile (Figure 1-A) is used for voice traffic, where no packets are dropped (marked) until the queue is full, and the second profile (Figure 1-B) Is used for supervision traffic. As shown if Figure 1-B, even If the queue is only slightly filled, a small percentage of supervision traffic is dropped and, as the queue fills, a progressively-greater percentage of supervision packets are dropped. For EF traffic, however, it is desirable to keep the queue length to a minimum to minimize delay in packet transmission. Thus, using queue length as a basis for deciding whether EF traffic should be limited is not an appropriate measure.

WO 03/013070 discloses a system that prevents from packet flooding in the case of packet flooding attacks, where an attacker uses up all the bandwidth to a victim. Therefore, a set of transitively connected cooperating machines build a neighborhood. Sites identify unwanted data, and ask the routers that forward said unwanted data to reduce the rate at which such unwanted data is forwarded.

US 2002/181401 A1 discloses a traffic management in packet-based networks using an allocation of bandwidth, which is based on a count of the number of endpoint connections associated with a specific service for a corresponding network device When reading the maximum allowed connections or bandwidth for a specific service, the network device stops forwarding any new call by dropping packets of new calls and informing endpoints to disconnect the new calls. Bandwidth is reserved by periodic queries to determine connection status and bandwidth allocation of endpoints, and by calculating current bandwidth allocation for specific type communications service on an interface of the router. Additional communication traffic is admitted if bandwidth is available.

Accordingly, there is a need In the art for improved methods and apparatus for limiting congestion in a packet-based network, particularly for controlling the transmission of EF-type traffic, such as voice traffic; preferably, such improved methods can be easily implemented in the architecture of existing apparatus.

### BRIEF SUMMARY OF THE INVENTION

To address the above-discussed deficiencies of the prior art, the present invention provides methods and apparatus for limiting congestion in a packet-based network, particularly for controlling the transmission of voice traffic. A node in the network, such as a router, transmits at least one data stream comprising a plurality of data packets to a second node; the data streams can correspond to existing voice calls being transmitted through the network. The bandwidth utilization between the first node and second node is determined, and supervision packets are forwarded from the first node to the second node at a rate that is a function of the bandwidth utilization, the rate being inversely-proportional to the bandwidth utilization. At the second node, the congestion of the network can be determined based on the rate at which the supervision packets are received and, if the congestion exceeds a predefined threshold, the establishment of new voice calls through the second node and into the network can be limited.

In general, the method for limiting congestion in a packet-based network includes the steps of: 1) transmitting at least one data stream comprising a plurality of data packets from a first node to a second node of the network; 2) determining the bandwidth utilization of the network between the first node and the second node; and 3) forwarding supervision packets from the first node to the second node, wherein the supervision packets are forwarded at a rate that is a function of the bandwidth utilization, the rate being inversely-proportional to the bandwidth utilization. By dropping supervision packets in high load situations, and thus effectively reducing the rate at which supervision packets are forwarded, more bandwidth is available for the transmission of data packets, thereby alleviating congestion in the network.

In a first exemplary embodiment, the step of forwarding supervision packets includes the steps of: 1) selecting a drop profile for supervision packets, wherein the drop profile defines a percentage of packets that will be dropped as a function of bandwidth utilization, and wherein the drop percentage increases as bandwidth utilized for payload traffic increases; and 2) applying the drop profile to supervision packets so that the percentage of received supervision packets defined by the drop profile is forwarded to the second node. A drop profile can be defined, for example, using a data table or an algorithm.

In a second exemplary embodiment, the step of forwarding supervision packets includes the steps of: 1) selecting a first (queue-length based) RED drop profile for the supervision packets, the first drop profile defining a first drop rate at which supervision packets will be dropped for transmission; and 2) selecting a second (queue-length based) RED drop profile for the supervision packets when the bandwidth utilization exceeds a predefined value, the second drop profile defining a second drop rate at which supervision packets will be dropped for transmission, wherein the second drop rate exceeds the first drop rate; and 3) applying one of these drop profiles to supervision packets, as a function of bandwidth utilization, so that the percentage of received supervision packets defined by the selected drop profile is forwarded to the second node. Additional drop profiles can be defined for additional predefined values for bandwidth utilization, thereby allowing for dynamic modification of the forwarding rate of supervision packets.

In an exemplary embodiment, the step of determining the bandwidth utilization of the packet-based network between the first node and the second node includes the steps of: 1) measuring the transmission rate of data packets from the first node to the second node; and 2) comparing the transmission rate to the maximum bandwidth of the packet-based network between the first node and the second node. If the data streams are associated with different packet classes, the step of determining the bandwidth utilization can include the steps of: 1) measuring the transmission rate from the first node to the second node of data packets corresponding to each packet class; and 2) comparing the transmission rate of data packets corresponding to each packet class to a maximum bandwidth defined for each packet class. A packet class can be associated, for example, with data packets containing voice data.

The principles of the invention are most suitably implemented in a router for routing data packets in a packet-based network. An exemplary router in accordance with the principles of the invention includes: 1) means for receiving at least one data stream comprising a plurality of data packets; 2) means for transmitting the at least one data stream comprising a plurality of data packets to a second node of a packet-based network; 3) means for determining the bandwidth utilization of the packet-based network between the router and the second node; 4) means for receiving supervision packets; 5) means for dropping at least a portion of the supervision packets, wherein the drop rate is a function of and proportional to the bandwidth utilization; and 6) means for transmitting the supervision packets that are not dropped to the second node, whereby the forwarding rate of the supervision packets is a function of and inversely-proportional to the bandwidth utilization

In a first exemplary router, the means for dropping at least a portion of the supervision packets comprises: 1) means for selecting a drop profile for the supervision packets, wherein the drop profile defines a percentage of packets that will be dropped as a function of bandwidth utilization, and wherein the drop percentage increases as bandwidth utilized for payload traffic increases; and 2) applying this drop profile to supervision packets so that the percentage of received supervision packets defined by the drop profile is forwarded to the second node.

In a second exemplary router, the means for dropping at least a portion of the supervision packets comprises: 1) means for selecting a first (queue-length based) RED drop profile for the supervision packets, the first drop profile defining a first drop rate at which supervision packets will be dropped for transmission; and 2) means for selecting a second (queue-length based) RED drop profile for the supervision packets when the bandwidth utilization exceeds a predefined value, the second drop profile defining a second drop rate at which supervision packets will be dropped for transmission, wherein the second drop rate exceeds the first drop rate; and 3) applying one of these drop profiles to supervision packets, as a function of bandwidth utilization, so that the percentage of received supervision packets defined by the selected drop profile is forwarded to the second node.

In an exemplary router, the means for determining the bandwidth utilization of the packet-based network between the first node and the second node comprises: 1) means for measuring the transmission rate of data packets from the router to the second node; and 2) means for comparing the transmission rate to the maximum bandwidth of the packet-based network between the router and the second node. If the data streams are associated with different packet classes, the means for determining the bandwidth utilization can include: 1) means for measuring the transmission rate from the first node to the second node of data packets corresponding to each packet class; and 2) means for comparing the transmission rate of data packets corresponding to each packet class to a maximum bandwidth defined for each packet class.

In a particularly advantageous embodiment, the principles of the present invention are utilized to control the transmission of voice traffic through a packet-based network. In such embodiments, the invention includes the steps of: 1) receiving at least one data stream comprising a plurality of voice data packets transmitted from a first node at a second node of the packet-based network, wherein each of the at least one data stream corresponds to an existing voice call being transmitted through the packet-based network; 2) receiving supervision packets forwarded from the first node at the second node, wherein the supervision packets are forwarded by the first node at a rate that is a function of a bandwidth utilization of the packet-based network between the first node and the second node, the rate being inversely-proportional to the bandwidth utilization; 3) determining at the second node, based on the rate at which the supervision packets are received, the congestion of the packet-based network; and 4) if the congestion of the packet-based network exceeds a predefined threshold, limiting the establishment of new voice calls through the second node and into the packet-based network.

In a first exemplary embodiment of the invention to control the transmission of voice traffic through a packet-based network, the forwarding of the supervision packets by the first node includes the steps of: 1) selecting a drop profile for supervision packets, the drop profile mapping bandwidth utilization to a percentage of packets that will be dropped, wherein the drop percentage increases with the amount of bandwidth utilized for payload traffic; and 2) applying this drop profile to supervision packets so that the percentage of received supervision packets defined by the drop profile is forwarded to the second node.

In a secondary exemplary embodiment of the invention to control the transmission of voice traffic through a packet-based network, the forwarding of the supervision packets by the first node includes the steps of: 1) selecting a first (queue-length based) RED drop profile for the supervision packets, the first drop profile defining a first drop rate at which supervision packets will be dropped; and 2) selecting a second (queue-length based) RED drop profile for the supervision packets when the bandwidth utilization exceeds a predefined value, the second drop profile defining a second drop rate at which supervision packets will be dropped, wherein the second drop rate exceeds the first drop rate; and 3) applying one of these drop profiles to supervision packets, as a function of bandwidth utilization, so that the percentage of received supervision packets defined by the drop profile is forwarded to the second node.

In an exemplary embodiment of the invention to control the transmission of voice traffic through a packet-based network, the step of determining the bandwidth utilization of the packet-based network between the first node and the second node includes the steps of: 1) measuring the transmission rate of voice data packets from the first node to the second node; and 2) comparing the transmission rate to the maximum bandwidth of the packet-based network between the first node and the second node. If the data streams are associated with different packet classes, the step of determining the bandwidth utilization can include the steps of: 1) measuring the transmission rate from the first node to the second node of voice data packets corresponding to each packet class; and 2) comparing the transmission rate of voice data packets corresponding to each packet class to a maximum bandwidth defined for each packet class.

The foregoing has outlined, rather broadly, the principles of the present invention so that those skilled in the art may better understand the detailed description of the exemplary embodiments that follow. Those skilled in the art should appreciate that they can readily use the disclosed conception and exemplary embodiments as a basis for designing or modifying other structures and methods for carrying out the same purposes of the present invention. Those skilled in the art should also realize that such equivalent constructions do not depart from the spirit and scope of the invention in its broadest form.

### BRIEF DESCRIPTION OF THE DRAWINGS

For a more complete understanding of the principles of the present invention, reference is now made to the following detailed description taken in conjunction with the accompanying drawings, in which:

FIGURES 1-A and 1-B illustrate an exemplary prior art use of Random Early Drop (RED) for Expedited Forwarding (EF) type traffic;

FIGURES 2-A and 2-B illustrate an exemplary use of bandwidth-based RED for Expedited Forwarding (EF) type traffic in accordance with the principles of the present invention; and

FIGURE 3 illustrates a second exemplary use of bandwidth-based RED for Expedited Forwarding (EF) type traffic in accordance with the principles of the present invention.

### DETAILED DESCRIPTION OF THE INVENTION

As described *supra,* using queue length (of the physical queue) as a basis for controlling whether EF traffic needs to be limited is not, by itself, an appropriate measure, because a significant packet queue indicates that EF traffic was above the maximum amount of EF traffic allowed by the scheduler for some time, when it is possibly too late to recover without packet losses. Thus, for EF traffic, another mechanism than RED, based solely on queue length, is needed. The invention provides a new mechanism to early detect abnormal traffic patterns for high-priority delay sensitive traffic, such as DiffServ EF marked IP packets. The mechanism can be used to detect traffic overload for EF traffic before end users notice any packet drop of payload traffic, and it is implemented by controlling the packet drop rate of probing traffic (*i.e.,* supervision packets). The mechanism can also be used for call admission control in connectionless IP networks, without the need for bandwidth reservation. Although the mechanism is similar to RED, the novelty is that packet drop is not triggered solely by queue length, but by bandwidth utilization.

The principle of the invention is to adapt a packet transmission scheduler so that the number of packets (or the bandwidth used by forwarded packets) can be measured. Then, if the scheduler sees too many packets (or too much bandwidth used), supervision packets are dropped. Because only packets that are classified with high loss priority (which are used to supervise the congestion status of the network) are first dropped, the invention can be used to indicate network congestion to communication endpoints without affecting payload traffic (which then can be sent with low loss priority). Rather than the conventional queue-based RED mechanism, the principle of the invention is the novel use of bandwidth-based RED. The bandwidth-based RED mechanism is characterized by the processes of: 1) determining the current bandwidth utilization, which can be calculated for each forwarding class; and 2) based on the bandwidth utilization, marking or dropping supervision packets; i.e., supervision packets are forwarded at a rate that is a function of the bandwidth utilization, where the rate is inversely-proportional to the bandwidth utilization. Different drop profiles can be used for different traffic types.

In an exemplary embodiment, the first step is to calculate the current bandwidth utilization, which can be performed for each forwarding class. This data is typically provided by the performance measurement data collected by most conventional routers. A time-window based algorithm can be used to calculate current bandwidth per forwarding class; both jumping window and sliding window measurements can be used, although sliding window measurements should have better results. The window length should be configurable to allow averaging bandwidth utilization over a certain interval.

An alternative to calculation of the actual bandwidth utilization is to approximate it on the basis of the number of packets per second. If an average packet length can be assumed, counting packets can be a useful approximation of actual bandwidth utilization, and counting packets per second is an easier calculation than summing up packet lengths.

Conventional currently-available routers support WRED based on queue length. Several profiles can be configured for the same queue, and the matching profile is chosen on a per-packet basis by use of classification. The drop profiles are configured by configuration statements and are typically not changed often. Figures 1-A and 1-B illustrate an exemplary prior art static configuration used by conventional routers. Figure 1-A illustrates a drop profile for voice traffic, and 1-B illustrates a drop profile for supervision packets, where the drop profile is a function of queue length.

The basic principle of the invention illustrated in Figures 2-A and 2-B. Figure 2-A illustrates a drop profile for voice traffic, and 2-B illustrates a drop profile for supervision packets, where the drop profile is a function of bandwidth utilization. Instead of determining the packet drop rate based solely on queue length, as done in the examples in Figures 1-A and 1-B, the packet drop rate is selected as a function of bandwidth utilization. In an exemplary embodiment, below a configurable threshold, no packets are dropped, while above a certain bandwidth utilization packets are dropped at an increasing (configurable) rate until it reaches a second threshold. Above that second threshold, all supervision packets are dropped.

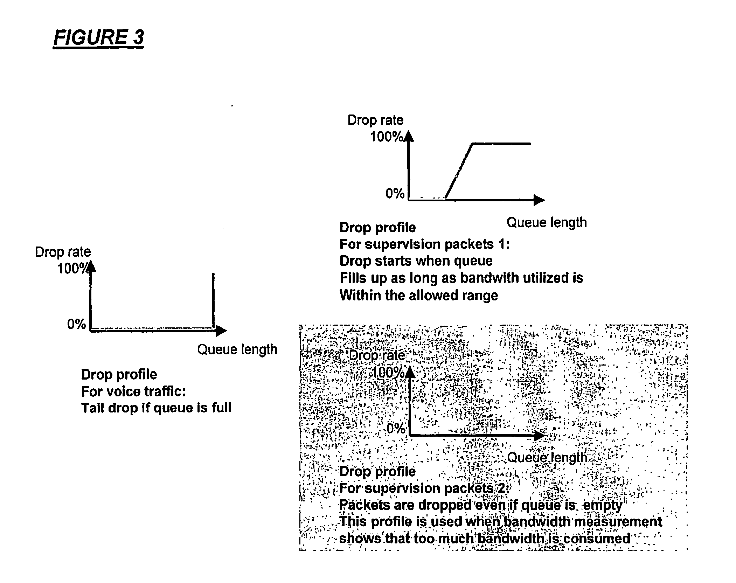

Figure 3 illustrates an alternative implementation where traditional queue-length based drop profiles are used to achieve the same functionality. The embodiment illustrated is easily implemented on currently-available routers using queue-length based WRED and measurement of bandwidth router mechanisms. No hardware modifications should be required, but software to dynamically change WRED behavior as a function of bandwidth utilization must be provided. Instead of using a drop profile that relates the packet drop rate only to bandwidth utilization (as done in Figures 2-1 and 2-B), a set of drop profiles that relate drop rate to queue length is used. In the example of Figure 3, two different drop profiles for supervision packets, and one threshold, are shown. As shown in Figure 3, a first drop profile for supervision packets begins to drop packets when the queue fills up provided the bandwidth utilization is within an allowed range. A second drop profile begins to drop supervision packets even if the queue is empty, and is used when bandwidth utilization exceeds a threshold. An additional function is used to select which of the two drop profiles is applied to supervision packets. As long as the bandwidth utilization is below a threshold, the drop profile with moderate drop rate is used, so packets are only dropped when the queues fill up. Above the threshold, the second drop profile is used, and a certain percentage of supervision packets is dropped, even if the queue is empty. In other embodiments, additional profiles triggered by different thresholds can be employed. For example, a configuration that allows dropping 50% of the supervision packets when bandwidth utilization is above level 1 (even if the queue is empty), and drops 100% of the supervision packets when bandwidth utilization is above a higher level 2. There are many ways to implement the dynamic behavior described above in a router. Among the alternatives, two solutions are preferable: either dynamically reconfigure the drop profile or reconfigure the packet classifications as a function of bandwidth utilization. For dynamic reconfiguration of the drop profile, the number of profiles per queue does not need to change, but it is possible to dynamically change the profile to change the dropping behavior. For dynamic reconfiguration of the packet classifiers, before a certain drop profile is applied to a packet to be transmitted, it passes a set of classifiers that determine which profile is to be applied on the packet. In conventional routers currently available, normally basic and multifield classifiers are supported. It is possible, however, to increase the number of profiles per forwarding class; e.g., from two profiles for "payload" and "supervision" packets to three profiles for "payload", "supervision below threshold" and "supervision above threshold." This would allow dynamic reconfiguration of the packet classifiers based on bandwidth utilization. When the traffic is below the threshold, the "supervision below threshold" profile is applied to supervision packets, and when traffic exceeds the threshold, the classifier is reconfigured to use the "supervision above threshold" profile.

An ancillary benefit of the invention is that a decrease in the forwarding rate of supervision packets as bandwidth utilization increases serves as an indicator of congestion in the backbone. Network nodes controlling the admission of new calls into the network can have a threshold associated with the rate at which supervision packets are received and, if the rate exceeds the threshold, the establishment of new calls into the network can be throttled, which helps to ensure that sufficient bandwidth remains available for all existing calls without dropping voice packets associated with such calls.

From the foregoing, those skilled in the art will recognize that the present invention provides improved methods and apparatus for limiting congestion in a packet-based network, particularly for controlling the transmission of voice traffic. Although the present invention has been described in detail, those skilled in the art will conceive of various changes, substitutions and alterations to the exemplary embodiments described herein without departing from the spirit and scope of the invention in its broadest form. The exemplary embodiments presented herein illustrate the principles of the invention and are not intended to be exhaustive or to limit the invention to the form disclosed; it is intended that the scope of the invention be limited only by the claims recited hereinafter, and their equivalents.

## Claims

1. A method for limiting congestion in a packet-based network, said method comprising the steps of:
transmitting at least one data stream comprising a plurality of data packets from a first node to a second node of said packet-based network;
determining the bandwidth utilization of said packet-based network between said first node and said second node; and
forwarding probing packets from said first node to said second node, wherein said probing packets are forwarded at a rate that is a function of said bandwidth utilization, thereby indicating a congestion status of the network, said rate of transmission being inversely-proportional to said bandwidth utilization.

2. The method recited in Claim 1, wherein said step of forwarding probing packets comprises the steps of:
selecting a first drop profile for said probing packets, said first drop profile defining a first drop rate at which probing packets received at said first node will be dropped for forwarding; and
selecting a second drop profile for said probing packets when said bandwidth utilization exceeds a predefined value, said second drop profile defining a second drop rate at which probing packets will be dropped for forwarding, wherein said second drop rate exceeds said first drop rate.

3. The method recited in Claim 2, wherein said step of forwarding probing packets further comprises the step of selecting a third drop profile for said probing packets when said bandwidth utilization exceeds a second predefined value, said third drop profile defining a third drop rate at which probing packets will be dropped for forwarding, wherein said third drop rate exceeds said second drop rate.

4. The method recited in Claim 2, wherein said step of determining the bandwidth utilization of said packet-based network between said first node and said second node comprises the steps of:
measuring the transmission rate of data packets from said first node to said second node; and
comparing said transmission rate to the maximum bandwidth of said packet-based network between said first node and said second node.

5. The method recited in Claim 2, wherein said at least one data stream comprising a plurality of data packets comprises packets containing voice data associated with a first telephone call.

6. The method recited in Claim 5, further comprising the step of limiting the establishment of new telephone calls through said packet-based network when said bandwidth utilization exceeds said predefined value.

7. The method recited in Claim 2, wherein said at least one data stream is associated with a first packet class, and wherein said step of determining the bandwidth
utilization of said packet-based network between said first node and said second node comprises the steps of:
measuring the transmission rate of data packets corresponding to said first packet class from said first node to said second node; and
comparing said transmission rate of data packets corresponding to said first packet class to a maximum bandwidth defined for said first packet class.

8. The method recited in Claim 7, wherein said first packet class is associated with data packets containing voice data.

9. A router for routing data packets in a packet-based network, said router comprising:
means for receiving at least one data stream comprising a plurality of data packets;
means for transmitting said at least one data stream comprising a plurality of data packets to a second node of said packet-based network;
means for determining the bandwidth utilization of said packet-based network between said router and said second node;
means for receiving probing packets;
means for dropping at least a portion of said probing packets, wherein the drop rate is a function of and proportional to said bandwidth utilization; and
means for transmitting the probing packets that are not dropped to said second node, whereby the transmission rate of said probing packets is a function of and inversely-proportional to said bandwidth utilization.

10. The router recited in Claim 9, wherein said means for transmitting probing packets comprises:
means for selecting a first drop profile for said probing packets, said first drop profile defining a first drop rate at which probing packets will be dropped for forwarding; and
means for selecting a second drop profile for said probing packets when said bandwidth utilization exceeds a predefined value, said second drop profile defining a second drop rate at which probing packets will be dropped for forwarding, wherein said second drop rate exceeds said first drop rate.

11. The router recited in Claim 10, wherein said means for transmitting probing packets further comprises means for selecting a third drop profile for said probing packets when said bandwidth utilization exceeds a second predefined value, said third drop profile defining a third drop rate at which probing packets will be dropped for forwarding, wherein said third drop rate exceeds said second drop rate.

12. The router recited in Claim 10, wherein said means for determining the bandwidth utilization of said packet-based network between said first node and said second node comprises:
means for measuring the transmission rate of data packets from said router to said second node; and
means for comparing said transmission rate to the maximum bandwidth of said packet-based network between said router and said second node.

13. The router recited in Claim 10, wherein said at least one data stream comprising a plurality of data packets comprises packets containing voice data associated with a first telephone call.

14. The router recited in Claim 13, further comprising means for limiting the establishment of new telephone calls through said packet-based network when said bandwidth utilization exceeds said predefined value.

15. The router recited in Claim 10, wherein said at least one data stream is associated with a first packet class, and wherein said means for determining the bandwidth utilization of said packet-based network between said first node and said second node comprises:
means for measuring the transmission rate of data packets corresponding to said first packet class from said router to said second node; and
means for comparing said transmission rate of data packets corresponding to said first packet class to a maximum bandwidth defined for said first packet class.

16. The router recited in Claim 15, wherein said first packet class is associated with data packets containing voice data.

17. A method for limiting congestion in a packet-based network, said method comprising the steps of:
receiving at least one data stream comprising a plurality of voice data packets transmitted from a first node at a second node of said packet-based network, wherein said at least one data stream corresponds to an existing voice call being transmitted through said packet-based network;
receiving probing packets forwarded from said first node at said second node, wherein said probing packets are forwarded by said first node at a rate that is a function of a bandwidth utilization of said packet-based network between said first node and said second node, thereby indicating a congestion status of the network, said rate being inversely-proportional to said bandwidth utilization;
determining at said second node, based on said rate at which said probing packets are received, the congestion of said packet-based network; and
if said congestion of said packet-based network exceeds a predefined threshold, limiting the establishment of new voice calls through said second node and into said packet-based network.

18. The method recited in Claim 17, wherein the forwarding of said probing packets by said first node comprises the steps of:
selecting a first drop profile for said probing packets, said first drop profile defining a first drop rate at which probing packets will be dropped; and
selecting a second drop profile for said probing packets when said bandwidth utilization exceeds a predefined value, said second drop profile defining a second drop rate at which probing packets will be dropped, wherein said second drop rate exceeds said first drop rate.

19. The method recited in Claim 18, wherein the transmission of said probing packets by said first node further comprises the step of selecting a third drop profile for said probing packets when said bandwidth utilization exceeds a second predefined value, said third drop profile defining a third drop rate at which probing packets will be dropped, wherein said third drop rate exceeds said second drop rate.

20. The method recited in Claim 18, wherein the determination of said bandwidth utilization of said packet-based network between said first node and said second node comprises the steps of:
measuring the transmission rate of said voice data packets from said first node to said second node; and
comparing said transmission rate to the maximum bandwidth of said packet-based network between said first node and said second node.

21. The method recited in Claim 18, wherein said at least one data stream is associated with a first packet class, and wherein said step of determining the bandwidth utilization of said packet-based network between said first node and said second node comprises the steps of:
measuring the transmission rate of data packets corresponding to said first packet class from said first node to said second node; and
comparing said transmission rate of data packets corresponding to said first packet class to a maximum bandwidth defined for said first packet class.

## Patentansprüche

1. Verfahren zur Begrenzung von Überlastung in einem paketbasierten Netz, wobei das Verfahren die folgenden Schritte umfasst:
Übertragen mindestens eines Datenstroms, der mehrere Datenpakete umfasst, von einem ersten Knoten an einen zweiten Knoten des paketbasierten Netzes;
Ermitteln der Bandbreitennutzung des paketbasierten Netzes zwischen dem ersten Knoten und dem zweiten Knoten; und
Weiterleiten von Prüfpaketen von dem ersten Knoten an den zweiten Knoten, wobei die Prüfpakete mit einer Rate weitergeleitet werden, die von der Bandbreitennutzung abhängt, wodurch ein Überlastungszustand des Netzes angezeigt wird, wobei die Rate der Übertragung zu der Bandbreitennutzung umgekehrt proportional ist.

2. Verfahren nach Anspruch 1, wobei der Schritt des Weiterleitens von Prüfpaketen die folgenden Schritte umfasst:
Auswählen eines ersten Profils des Fallenlassens für die Prüfpakete, wobei das erste Profil des Fallenlassens eine erste Rate des Fallenlassens definiert, mit der Prüfpakete, die am ersten Knoten empfangen wurden, vom Weiterleiten fallen gelassen werden; und
Auswählen eines zweiten Profils des Fallenlassens für die Prüfpakete, wenn die Bandbreitennutzung einen vordefinierten Wert übersteigt, wobei das zweite Profil des Fallenlassens eine zweite Rate des Fallenlassens definiert, mit der Prüfpakete vom Weiterleiten fallen gelassen werden, wobei die zweite Rate des Fallenlassens die erste Rate des Fallenlassens übersteigt.

3. Verfahren nach Anspruch 2, wobei der Schritt des Weiterleitens von Prüfpaketen weiterhin den Schritt des Auswählens eines dritten Profils des Fallenlassens für die Prüfpakete umfasst, wenn die Bandbreitennutzung einen zweiten vordefinierten Wert übersteigt, wobei das dritte Profil des Fallenlassens eine dritte Rate des Fallenlassens definiert, mit der Prüfpakete vom Weiterleiten fallen gelassen werden, wobei die dritte Rate des Fallenlassens die zweite Rate des Fallenlassens übersteigt.

4. Verfahren nach Anspruch 2, wobei der Schritt des Ermittelns der Bandbreitennutzung des paketbasierten Netzes zwischen dem ersten Knoten und dem zweiten Knoten die folgenden Schritte umfasst:
Messen der Übertragungsrate von Datenpaketen von dem ersten Knoten an den zweiten Knoten und
Vergleichen der Übertragungsrate mit der maximalen Bandbreite des paketbasierten Netzes zwischen dem ersten Knoten und dem zweiten Knoten.

5. Verfahren nach Anspruch 2, wobei der mindestens eine Datenstrom, der mehrere Datenpakete umfasst, Pakete umfasst, die Sprachdaten enthalten, die mit einem ersten Telefonanruf verknüpft sind.

6. Verfahren nach Anspruch 5, das weiterhin den Schritt des Begrenzens des Aufbaus neuer Telefonanrufe durch das paketbasierte Netz umfasst, wenn die Bandbreitennutzung den vordefinierten Wert übersteigt.

7. Verfahren nach Anspruch 2, wobei der mindestens eine Datenstrom mit einer ersten Paketklasse verknüpft ist und wobei der Schritt des Ermittelns der Bandbreitennutzung des paketbasierten Netzes zwischen dem ersten Knoten und dem zweiten Knoten die folgenden Schritte umfasst:
Messen der Übertragungsrate von Datenpaketen, die der ersten Paketklasse entsprechen, von dem ersten Knoten an den zweiten Knoten und
Vergleichen der Übertragungsrate von Datenpaketen, die der ersten Paketklasse entsprechen, mit einer maximalen Bandbreite, die für die erste Paketklasse definiert ist.

8. Verfahren nach Anspruch 7, wobei die erste Paketklasse mit Datenpaketen verknüpft ist, die Sprachdaten enthalten.

9. Router zum Routen von Datenpaketen in einem paketbasierten Netz, wobei der Router Folgendes umfasst:
Mittel zum Empfangen mindestens eines Datenstroms, der mehrere Datenpakete umfasst;
Mittel zum Übertragen des mindestens einen Datenstroms, der mehrere Datenpakete umfasst, an einen zweiten Knoten des paketbasierten Netzes;
Mittel zum Ermitteln der Bandbreitennutzung des paketbasierten Netzes zwischen dem Router und dem zweiten Knoten;
Mittel zum Empfangen von Prüfpaketen;
Mittel zum Fallenlassen mindestens eines Teils der Prüfpakete, wobei die Rate des Fallenlassens von der Bandbreitennutzung abhängt und zu dieser proportional ist; und
Mittel zum Übertragen der Prüfpakete, die nicht fallen gelassen werden, an den zweiten Knoten, wobei die Übertragungsrate der Prüfpakete von der Bandbreitennutzung abhängt und zu dieser umgekehrt proportional ist.

10. Router nach Anspruch 9, wobei das Mittel zum Übertragen von Prüfpaketen Folgendes umfasst:
Mittel zum Auswählen eines ersten Profils des Fallenlassens für die Prüfpakete, wobei das erste Profil des Fallenlassens eine erste Rate des Fallenlassens definiert, mit der Prüfpakete vom Weiterleiten fallen gelassen werden; und
Mittel zum Auswählen eines zweiten Profils des Fallenlassens für die Prüfpakete, wenn die Bandbreitennutzung einen vordefinierten Wert übersteigt, wobei das zweite Profil des Fallenlassens eine zweite Rate des Fallenlassens definiert, mit der Prüfpakete vom Weiterleiten fallen gelassen werden, wobei die zweite Rate des Fallenlassens die erste Rate des Fallenlassens übersteigt.

11. Router nach Anspruch 10, wobei das Mittel zum Übertragen von Prüfpaketen weiterhin Mittel zum Auswählen eines dritten Profils des Fallenlassens für die Prüfpakete umfasst, wenn die Bandbreitennutzung einen zweiten vordefinierten Wert übersteigt, wobei das dritte Profil des Fallenlassens eine dritte Rate des Fallenlassens definiert, mit der Prüfpakete vom Weiterleiten fallen gelassen werden, wobei die dritte Rate des Fallenlassens die zweite Rate des Fallenlassens übersteigt.

12. Router nach Anspruch 10, wobei das Mittel zum Ermitteln der Bandbreitennutzung des paketbasierten Netzes zwischen dem ersten Knoten und dem zweiten Knoten Folgendes umfasst:
Mittel zum Messen der Übertragungsrate von Datenpaketen von dem Router an den zweiten Knoten und
Mittel zum Vergleichen der Übertragungsrate mit der maximalen Bandbreite des paketbasierten Netzes zwischen dem Router und dem zweiten Knoten.

13. Router nach Anspruch 10, wobei der mindestens eine Datenstrom, der mehrere Datenpakete umfasst, Pakete umfasst, die Sprachdaten enthalten, die mit einem ersten Telefonanruf verknüpft sind.

14. Router nach Anspruch 13, der weiterhin Mittel zum Begrenzen des Aufbaus neuer Telefonanrufe durch das paketbasierte Netz umfasst, wenn die Bandbreitennutzung den vordefinierten Wert übersteigt.

15. Router nach Anspruch 10, wobei der mindestens eine Datenstrom mit einer ersten Paketklasse verknüpft ist und wobei das Mittel zum Ermitteln der Bandbreitennutzung des paketbasierten Netzes zwischen dem ersten Knoten und dem zweiten Knoten Folgendes umfasst:
Mittel zum Messen der Übertragungsrate von Datenpaketen, die der ersten Paketklasse entsprechen, von dem Router an den zweiten Knoten und
Mittel zum Vergleichen der Übertragungsrate von Datenpaketen, die der ersten Paketklasse entsprechen, mit einer maximalen Bandbreite, die für die erste Paketklasse definiert ist.

16. Router nach Anspruch 15, wobei die erste Paketklasse mit Datenpaketen verknüpft ist, die Sprachdaten enthalten.

17. Verfahren zur Begrenzung von Überlastung in einem paketbasierten Netz, wobei das Verfahren die folgenden Schritte umfasst:
Empfangen mindestens eines Datenstroms, der mehrere Sprachdatenpakete umfasst, die von einem ersten Knoten übertragen wurden, an einem zweiten Knoten des paketbasierten Netzes, wobei der mindestens eine Datenstrom einem bestehenden Sprachanruf entspricht, der durch das paketbasierte Netz übertragen wird;
Empfangen von Prüfpaketen, die von dem ersten Knoten weitergeleitet wurden, am zweiten Knoten, wobei die Prüfpakete von dem ersten Knoten mit einer Rate weitergeleitet werden, die von einer Bandbreitennutzung des paketbasierten Netzes zwischen dem ersten Knoten und dem zweiten Knoten abhängt, wodurch ein Überlastungszustand des Netzes angezeigt wird, wobei die Rate zu der Bandbreitennutzung umgekehrt proportional ist;
Ermitteln der Überlastung des paketbasierten Netzes auf Grundlage der Rate, mit der die Prüfpakete empfangen werden, an dem zweiten Knoten; und
Begrenzen des Aufbaus neuer Sprachanrufe durch den zweiten Knoten und in das paketbasierte Netz, wenn die Überlastung des paketbasierten Netzes einen vordefinierten Schwellwert übersteigt.

18. Verfahren nach Anspruch 17, wobei das Weiterleiten der Prüfpakete durch den ersten Knoten die folgenden Schritte umfasst:
Auswählen eines ersten Profils des Fallenlassens für die Prüfpakete, wobei das erste Profil des Fallenlassens eine erste Rate des Fallenlassens definiert, mit der Prüfpakete fallen gelassen werden; und
Auswählen eines zweiten Profils des Fallenlassens für die Prüfpakete, wenn die Bandbreitennutzung einen vordefinierten Wert übersteigt, wobei das zweite Profil des Fallenlassens eine zweite Rate des Fallenlassens definiert, mit der Prüfpakete fallen gelassen werden, wobei die zweite Rate des Fallenlassens die erste Rate des Fallenlassens übersteigt.

19. Verfahren nach Anspruch 18, wobei die Übertragung der Prüfpakete durch den ersten Knoten weiterhin den Schritt des Auswählens eines dritten Profils des Fallenlassens für die Prüfpaketen umfasst, wenn die Bandbreitennutzung einen zweiten vordefinierten Wert übersteigt, wobei das dritte Profil des Fallenlassens eine dritte Rate des Fallenlassens definiert, mit der Prüfpakete fallen gelassen werden, wobei die dritte Rate des Fallenlassens die zweite Rate des Fallenlassens übersteigt.

20. Verfahren nach Anspruch 18, wobei die Ermittlung der Bandbreitennutzung des paketbasierten Netzes zwischen dem ersten Knoten und dem zweiten Knoten die folgenden Schritte umfasst:
Messen der Übertragungsrate der Sprachdatenpakete von dem ersten Knoten an den zweiten Knoten; und
Vergleichen der Übertragungsrate mit der maximalen Bandbreite des paketbasierten Netzes zwischen dem ersten Knoten und dem zweiten Knoten.

21. Verfahren nach Anspruch 18, wobei der mindestens eine Datenstrom mit einer ersten Paketklasse verknüpft ist und wobei der Schritt des Ermittelns der Bandbreitennutzung des paketbasierten Netzes zwischen dem ersten Knoten und dem zweiten Knoten die folgenden Schritte umfasst:
Messen der Übertragungsrate von Datenpaketen, die der ersten Paketklasse entsprechen, von dem ersten Knoten an den zweiten Knoten und
Vergleichen der Übertragungsrate von Datenpaketen, die der ersten Paketklasse entsprechen, mit einer maximalen Bandbreite, die für die erste Paketklasse definiert ist.

## Revendications

1. Procédé pour limiter l'engorgement dans un réseau par paquets, ledit procédé comprenant les étapes consistant à :
transmettre au moins un train de données comprenant une pluralité de paquets de données d'un premier noeud à un second noeud dudit réseau par paquets ;
déterminer l'utilisation de largeur de bande dudit réseau par paquets entre ledit premier noeud et ledit second noeud ; et
acheminer des paquets de sondage dudit premier noeud audit second noeud, moyennant quoi lesdits paquets de sondage sont acheminés à un taux qui est une fonction de ladite utilisation de largeur de bande, indiquant ainsi un statut d'engorgement du réseau, ledit taux de transmission étant inversement proportionnel à ladite utilisation de largeur de bande.

2. Procédé selon la revendication 1, dans lequel ladite étape d'acheminement des paquets de sondage comprend les étapes consistant à :
sélectionner un premier profil d'abandon desdits paquets de sondage, ledit premier profil d'abandon définissant un premier taux d'abandon auquel des paquets de sondage reçus au niveau dudit premier noeud seront abandonnés de l'acheminement ; et
sélectionner un second profil d'abandon desdits paquets de sondage lorsque ladite utilisation de largeur de bande excède une valeur prédéfinie, ledit second profil d'abandon définissant un second taux d'abandon auquel des paquets de sondage seront abandonnés de l'acheminement, moyennant quoi ledit second taux d'abandon excède ledit premier taux d'abandon.

3. Procédé selon la revendication 2, dans lequel ladite étape d'acheminement des paquets de sondage comprend en outre l'étape de sélection d'un troisième profil d'abandon desdits paquets de sondage lorsque ladite utilisation de largeur de bande excède une seconde valeur prédéfinie, ledit troisième profil d'abandon définissant un troisième taux d'abandon auquel des paquets de sondage seront abandonnés de l'acheminement, moyennant quoi ledit troisième taux d'abandon excède ledit second taux d'abandon.

4. Procédé selon la revendication 2, dans lequel ladite étape de détermination de l'utilisation de largeur de bande dudit réseau par paquets entre ledit premier noeud et ledit second noeud comprend les étapes consistant à :
mesurer le taux de transmission des paquets de données dudit premier noeud audit second noeud ; et
comparer ledit taux de transmission à la largeur de bande maximale dudit réseau par paquets entre ledit premier noeud et ledit second noeud.

5. Procédé selon la revendication 2, dans lequel au moins un dit train de données comprenant une pluralité de paquets de données comprend des paquets contenant des données vocales associées à un premier appel téléphonique.

6. Procédé selon la revendication 5, comprenant en outre l'étape consistant à limiter l'établissement de nouveaux appels téléphoniques à travers ledit réseau par paquets lorsque ladite utilisation de largeur de bande excède ladite valeur prédéfinie.

7. Procédé selon la revendication 2, dans lequel au moins un dit train de données est associé à une première classe de paquet et dans lequel ladite étape de détermination de l'utilisation de bande passante dudit réseau par paquets entre ledit premier noeud et ledit second noeud comprend les étapes consistant à :
mesurer le taux de transmission des paquets de données correspondant à ladite première classe de paquet dudit premier noeud audit second noeud ; et
comparer ledit taux de transmission des paquets de données correspondant à ladite première classe de paquet avec une largeur de bande maximale définie pour ladite première classe de paquet.

8. Procédé selon la revendication 7, dans lequel ladite première classe de paquet est associée à des paquets de données contenant des données vocales.

9. Routeur pour router des paquets de données dans un réseau par paquets, ledit routeur comprenant :
un moyen pour recevoir au moins un train de données comprenant une pluralité de paquets de données ;
un moyen pour transmettre au moins un dit train de données comprenant une pluralité de paquets de données à un second noeud dudit réseau par paquets ;
un moyen pour déterminer l'utilisation de largeur de bande dudit réseau par paquets entre ledit routeur et ledit second noeud ;
un moyen pour recevoir des paquets de sondage ;
un moyen pour abandonner au moins une portion desdits paquets de sondage, dans lequel le taux d'abandon est une fonction de et proportionnel à ladite utilisation de largeur de bande ; et
un moyen pour transmettre les paquets de sondage qui ne sont pas abandonnés audit second noeud, moyennant quoi le taux de transmission desdits paquets de sondage est une fonction de et inversement proportionnel à ladite utilisation de largeur de bande.

10. Routeur selon la revendication 9, dans lequel ledit moyen pour transmettre des paquets de sondage comprend :
un moyen pour sélectionner un premier profil d'abandon desdits paquets de sondage, ledit premier profil d'abandon définissant un premier taux d'abandon auquel des paquets de sondage seront abandonnés de l'acheminement; et
un moyen pour sélectionner un second profil d'abandon desdits paquets de sondage lorsque ladite utilisation de largeur de bande excède une valeur prédéfinie, ledit second profil d'abandon définissant un second taux d'abandon auquel des paquets de sondage seront abandonnés de l'acheminement, moyennant quoi ledit second taux d'abandon excède ledit premier taux d'abandon.

11. Routeur selon la revendication 10, dans lequel ledit moyen pour transmettre des paquets de sondage comprend en outre un moyen pour sélectionner un troisième profil d'abandon desdits paquets de sondage lorsque ladite utilisation de largeur de bande excède une seconde valeur prédéfinie, ledit troisième profil d'abandon définissant un troisième taux d'abandon auquel des paquets de sondage seront abandonnés de l'acheminement, moyennant quoi ledit troisième taux d'abandon excède ledit second taux d'abandon.

12. Routeur selon la revendication 10, dans lequel ledit moyen pour déterminer l'utilisation de largeur de bande dudit réseau par paquets entre ledit premier noeud et ledit second noeud comprend :
un moyen pour mesurer le taux de transmission des paquets de données dudit routeur audit second noeud; et
un moyen pour comparer ledit taux de transmission à la largeur de bande maximale dudit réseau par paquets entre ledit routeur et ledit second noeud.

13. Routeur selon la revendication 10, dans lequel au moins un dit train de données comprenant une pluralité de paquets de données comprend des paquets contenant des données vocales associées à un premier appel téléphonique.

14. Routeur selon la revendication 13, comprenant en outre un moyen pour limiter l'établissement de nouveaux appels téléphoniques à travers ledit réseau par paquets lorsque ladite utilisation de largeur de bande excède ladite valeur prédéfinie.

15. Routeur selon la revendication 10, dans lequel au moins un dit train de données est associé à une première classe de paquet et dans lequel ledit moyen pour déterminer l'utilisation de largeur de bande dudit réseau par paquets entre ledit premier noeud et ledit second noeud comprend :
un moyen pour mesurer le taux de transmission des paquets de données correspondant à ladite première classe de paquet dudit routeur audit second noeud; et
un moyen pour comparer ledit taux de transmission des paquets de données correspondant à ladite première classe de paquet avec une largeur de bande maximale définie pour ladite première classe de paquet.

16. Routeur selon la revendication 15, dans lequel ladite première classe de paquet est associée à des paquets de données contenant des données vocales.

17. Procédé pour limiter l'engorgement dans un réseau par paquets, ledit procédé comprenant les étapes consistant à :
recevoir au moins un train de données comprenant une pluralité de paquets de données vocales transmis d'un premier noeud à un second noeud dudit réseau par paquets, dans lequel au moins un dit train de données correspond à un appel vocal existant étant transmis à travers ledit réseau par paquets ;
recevoir des paquets de sondage acheminés dudit premier noeud audit second noeud, moyennant quoi lesdits paquets de sondage sont acheminés par ledit premier noeud à un taux qui est une fonction d'une utilisation de largeur de bande dudit réseau par paquets entre ledit premier noeud et ledit second noeud, indiquant ainsi un statut d'engorgement du réseau, ledit taux étant inversement proportionnel à ladite utilisation de largeur de bande ;
déterminer au niveau dudit second noeud, sur la base dudit taux auquel lesdits paquets de sondage sont reçus, l'engorgement dudit réseau par paquets : et
si ledit engorgement dudit réseau par paquets excède un seuil prédéfini, limiter l'établissement de nouveaux appels vocaux via ledit second noeud et à l'intérieur dudit réseau par paquets.

18. Procédé selon la revendication 17, dans lequel l'acheminement desdits paquets de sondage par ledit premier noeud comprend les étapes consistant à :
sélectionner un premier profil d'abandon desdits paquets de sondage, ledit premier profil d'abandon définissant un premier taux d'abandon auquel des paquets de sondage seront abandonnés ; et
sélectionner un second profil d'abandon desdits paquets de sondage lorsque ladite utilisation de largeur de bande excède une valeur prédéfinie, ledit second profil d'abandon définissant un second taux d'abandon auquel des paquets de sondage seront abandonnés, moyennant quoi ledit second taux d'abandon excède ledit premier taux d'abandon.

19. Procédé selon la revendication 18, dans lequel la transmission desdits paquets de sondage par ledit premier noeud comprend en outre l'étape de sélection d'un troisième profil d'abandon desdits paquets de sondage lorsque ladite utilisation de largeur de bande excède une seconde valeur prédéfinie, ledit troisième profil d'abandon définissant un troisième taux d'abandon auquel des paquets de sondage seront abandonnés, moyennant quoi ledit troisième taux d'abandon excède ledit second taux d'abandon.

20. Procédé selon la revendication 18, dans lequel la détermination de ladite utilisation de largeur de bande dudit réseau par paquets entre ledit premier noeud et ledit second noeud comprend les étapes consistant à :
mesurer le taux de transmission desdits paquets de données vocales dudit premier noeud audit second noeud ; et
comparer ledit taux de transmission à la largeur de bande maximale dudit réseau par paquets entre ledit premier noeud et ledit second noeud.

21. Procédé selon la revendication 18, dans lequel au moins un dit train de données est associé à une première classe de paquet et dans lequel ladite étape de détermination de l'utilisation de largeur de bande dudit réseau par paquets entre ledit premier noeud et ledit second noeud comprend les étapes consistant à :
mesurer le taux de transmission des paquets de données correspondant à ladite première classe de paquet dudit premier noeud audit second noeud ; et
comparer ledit taux de transmission des paquets de données correspondant à ladite première classe de paquet avec une largeur de bande maximale définie pour ladite première classe de paquet.
